# EUROPEAN PATENT APPLICATION

(11) **EP 4 503 396 A1**
(43) Date of publication of application: **05.02.2025**
(21) Application number: 22935669.6
(22) Date of filing: 30.11.2022
(51) Int. Cl.: H02K 5/10, H02K 5/08, H02K 15/14

(54) **MOTOR AND METHOD FOR MANUFACTURING MOTOR**

(30) Priority: 30.03.2022 JP 2022057005
(71) Applicant: Panasonic Intellectual Property Management Co., Ltd., Kadoma-shi, Osaka 571-0057 (JP)
(72) Inventor: KUMASHIRO, Masatomo, Osaka 571-0057 (JP)
(74) Representative: SSM Sandmair
(86) International application number: PCT/JP2022/044281
(87) International publication number: WO 2023/188540

(57) **Abstract**

A motor includes a stator including a stator core and a coil wound around the stator core, a rotor that rotates with a magnetic force generated by the stator, a circuit board on which an electronic component for controlling energization of the coil is mounted, a mold resin covering at least a part of the stator core and the circuit board, a bush that is one example of a lead wire drawing member at least a part of which is in contact with the mold resin, and a lead wire connected to the circuit board and led out to an outside via the bush, wherein the bush includes a catch that catches on a mold used when the mold resin is molded.

## Description

### TECHNICAL FIELD

The present disclosure relates to a motor and a method for manufacturing the motor. The present disclosure particularly relates to a fan motor used for, for example, a blower and a method for manufacturing the fan motor.

### BACKGROUND ART

Motors are used in products in various fields. For example, a motor is used as a fan motor in a blower. The blower rotates a fan attached to a shaft of a rotor included in a fan motor to blow air. The blower discharges heat generated inside a product on which the blower is mounted to the outside or blows cool air or warm air generated inside the product. For example, a blower used in a refrigerator includes an inside fan for blowing cool air into the refrigerator.

As a fan motor, a fan motor having a structure in which a stator and a circuit board are covered with a mold resin is known. This type of fan motor includes a stator, a rotor, a circuit board, and a mold resin (see PTL 1). The stator includes a stator coil and a stator core. The rotor rotates with the magnetic force of the stator. An electronic component that controls energization of the stator coil is mounted on the circuit board. The mold resin covers at least a part of the stator core and the circuit board.

In such a fan motor, a lead wire connected to the circuit board covered with the mold resin is led out to the outside via a lead wire drawing member such as a bush or a connector. Specifically, a part of the lead wire drawing member is covered with a mold resin, and a part of the lead wire drawing member is exposed from the mold resin. This forms a structure (lead wire leading structure) in which the lead wire is led out from the mold resin to the outside via the lead wire drawing member.

The mold resin is molded with a mold, but at this time, it is necessary to determine the position of the lead wire drawing member with respect to the mold. In the fan motor disclosed in PTL 1, a connector (lead wire drawing member) to which a lead wire is attached is fixed to a circuit board to determine a position of the connector with respect to the mold.

The fan motor may be installed in a place where moisture is high or a place where dew condensation occurs due to a temperature change. For example, a fan motor used to blow cool air into a refrigerator is installed in a place where dew condensation is likely to occur. When the fan motor is installed in a place where dew condensation is likely to occur like this, water (water droplets) generated by the dew condensation may enter the fan motor.

In this case, in the fan motor in which the resin lead wire drawing member and the circuit board are covered with a mold resin, an interface between the resin portions is present between the lead wire drawing member and the circuit board. Thus, when water is attached to the surface of the motor, there is a risk that water flowing along the surface of the motor enters the motor from the boundary (connecting part) between the lead wire drawing member and the mold resin, and the water that has entered the motor reaches the circuit board through the interface between the lead wire drawing member and the mold resin due to a capillary phenomenon. For example, in the fan motor disclosed in PTL 1, a connector made of resin, which is a lead wire drawing member, is fixed to a circuit board. Thus, water may enter the motor from the boundary between the connector and the mold resin, and the water that has entered the motor may reach the circuit board along the interface between the connector and the mold resin. When water reaches the circuit board like this, there is a risk of causing a defect such as a short circuit.

### Citation List

### Patent Literature

PTL 1: PCT International Publication No. 2019/021854

### SUMMARY OF THE INVENTION

The present disclosure has been made to solve such a problem. An object of the present disclosure is to provide a motor and a method for manufacturing the motor capable of preventing water that has entered the motor from a boundary between a lead wire drawing member and a mold resin from reaching a circuit board.

To achieve the above object, one aspect of a motor according to the present disclosure includes a stator including a stator core and a coil wound around the stator core, a rotor that rotates with a magnetic force generated by the stator, a circuit board on which an electronic component for controlling energization of the coil is mounted, a mold resin covering at least a part of the stator core and the circuit board, a lead wire drawing member at least a part of which is in contact with the mold resin, and a lead wire connected to the circuit board and led out to an outside via the lead wire drawing member, wherein the lead wire drawing member includes a catch that catches on a mold used when the mold resin is molded.

Another aspect of the motor according to the present disclosure includes a stator including a stator core and a coil wound around the stator core, a rotor that rotates with a magnetic force generated by the stator, a circuit board on which an electronic component that controls energization of the coil is mounted, a mold resin covering at least a part of the stator core and the circuit board, a lead wire drawing member at least a part of which is in contact with the mold resin, and a lead wire connected to the circuit board and led out to an outside via the lead wire drawing member, wherein the lead wire includes a conductive wire and an insulating film covering the conductive wire, an internal led-out portion of the lead wire, the internal led-out portion being led out from the lead wire drawing member to an inside, is covered with the mold resin, and the insulating film and the mold resin in the internal led-out portion are in close contact with each other by melting.

One aspect of a method for manufacturing a motor according to the present disclosure includes a connection step of connecting, to a circuit board, a lead wire to which a lead wire drawing member is attached, a disposition step of disposing, in a mold, a stator including a stator core around which a coil is wound and the circuit board, and a resin molding step of injecting a liquid resin into the mold and curing the liquid resin to cover at least a part of the stator and the circuit board with a mold resin, wherein in the disposition step, the lead wire drawing member is disposed in the mold by causing a catch included in the lead wire drawing member to catch on the mold, and in the resin molding step, the mold resin is brought into contact with at least a part of the lead wire drawing member.

The present disclosure makes it possible to obtain a motor capable of preventing water that has entered the motor from the boundary between the lead wire drawing member and the mold resin from reaching the circuit board.

### BRIEF DESCRIPTION OF THE DRAWINGS

Fig. 1 is an external perspective view of a motor according to an exemplary embodiment when viewed obliquely from above.
Fig. 2 is an external perspective view of the motor according to the exemplary embodiment when viewed obliquely from below.
Fig. 3 is an exploded perspective view of the motor according to the exemplary embodiment when a mold resin is omitted.
Fig. 4 is a sectional view of the motor according to the exemplary embodiment taken along a plane parallel to a longitudinal direction of a lead wire.
Fig. 5 is a sectional view of the motor according to the exemplary embodiment taken along a plane orthogonal to the longitudinal direction of the lead wire.
Fig. 6 is a diagram illustrating a connection relationship between a circuit board, a bush, and a lead wire in the motor according to the exemplary embodiment.
Fig. 7A is a diagram illustrating a state when a lead wire is connected to a circuit board in a connection step of the method for manufacturing the motor according to the exemplary embodiment.
Fig. 7B is a diagram illustrating a state after the lead wire is connected to the circuit board in the connection step of the method for manufacturing the motor according to the exemplary embodiment.
Fig. 7C is a diagram illustrating a state when the circuit board to which the lead wire is connected is disposed in a lower mold in a disposition step of the method for manufacturing the motor according to the exemplary embodiment.
Fig. 7D is a diagram illustrating a state where an upper mold is disposed in the disposition step of the method for manufacturing the motor according to the exemplary embodiment.
Fig. 7E is a diagram illustrating a state where a bush is fixed by the lower mold and the upper mold in the disposition step of the method for manufacturing the motor according to the exemplary embodiment.
Fig. 7F is a diagram illustrating a resin molding step in the method for manufacturing the motor according to the exemplary embodiment.
Fig. 8 is a diagram illustrating a connection relationship between a circuit board, a bush, and a lead wire in a motor of a comparative example.
Fig. 9 is a partial sectional view of the motor of the comparative example.
Fig. 10 is a partial sectional view of the motor according to the exemplary embodiment.
Fig. 11 is a diagram illustrating a configuration of a bush according to Modification 1.
Fig. 12 is a diagram illustrating a configuration of a bush according to Modification 2.
Fig. 13 is a diagram illustrating a configuration of a bush according to Modification 3.
Fig. 14 is a diagram illustrating a state when a bush according to Modification 4 is disposed in a mold.
Fig. 15 is a diagram illustrating a configuration of a bush according to Modification 4.
Fig. 16 is a diagram illustrating a configuration of a bush according to Modification 5.
Fig. 17 is a diagram illustrating a configuration of a bush according to Modification 6.
Fig. 18 is a diagram illustrating a configuration of a bush according to Modification 7.
Fig. 19 is a diagram illustrating a state when a bush according to Modification 8 is disposed in a mold.
Fig. 20 is a diagram illustrating a configuration of a bush according to Modification 8.
Fig. 21 is a diagram illustrating a state where a bush according to Modification 8 is disposed in a mold having another configuration.

### DESCRIPTION OF EMBODIMENT

An exemplary embodiment of the present disclosure will be described below with reference to the drawings. Each exemplary embodiment described below illustrates one specific example of the present disclosure. Therefore, numerical values, constituent elements, arrangement positions and connection modes of the constituent elements, steps, order of the steps, and the like shown in the following exemplary embodiment are merely examples, and are not intended to limit the present disclosure. The following exemplary embodiment includes components in which a component, which is not described in the independent claim showing the highest concept of the present disclosure, is described as an optional component.

Each of the drawings is a schematic view and is not necessarily exactly illustrated. In the drawings, substantially the same components are designated by the same reference marks, and duplicate description will be omitted or simplified. In the present specification, the terms "upper" and "lower" do not necessarily refer to an upward direction (vertically upward) and a downward direction (vertically downward) in terms of absolute space recognition.

### (Exemplary embodiment)

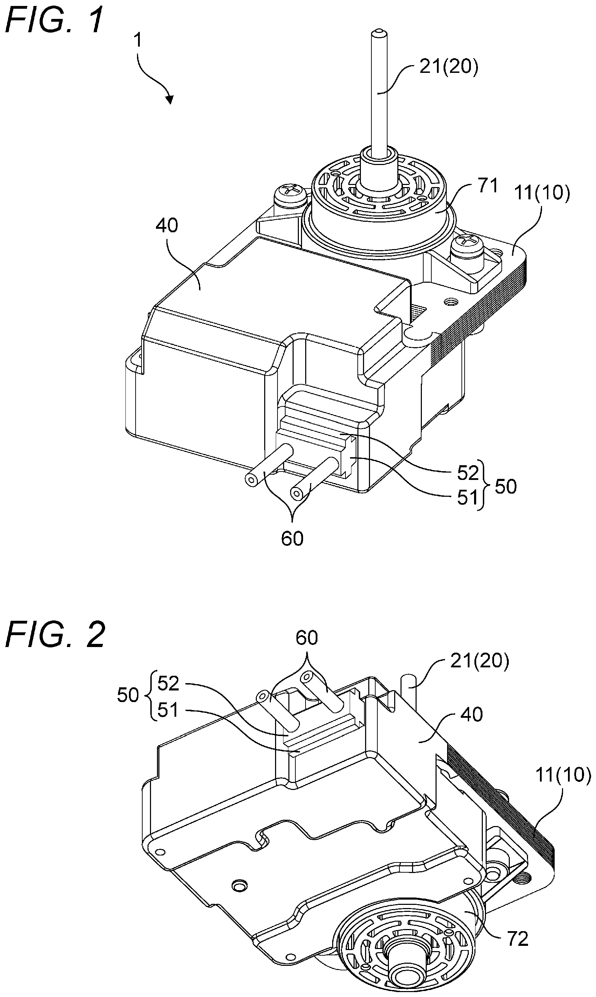

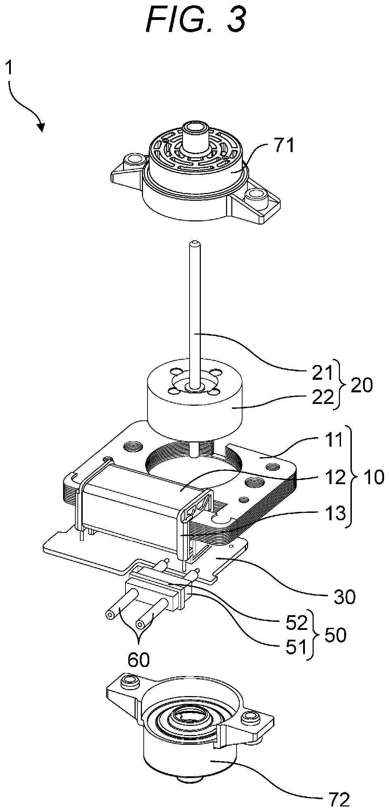

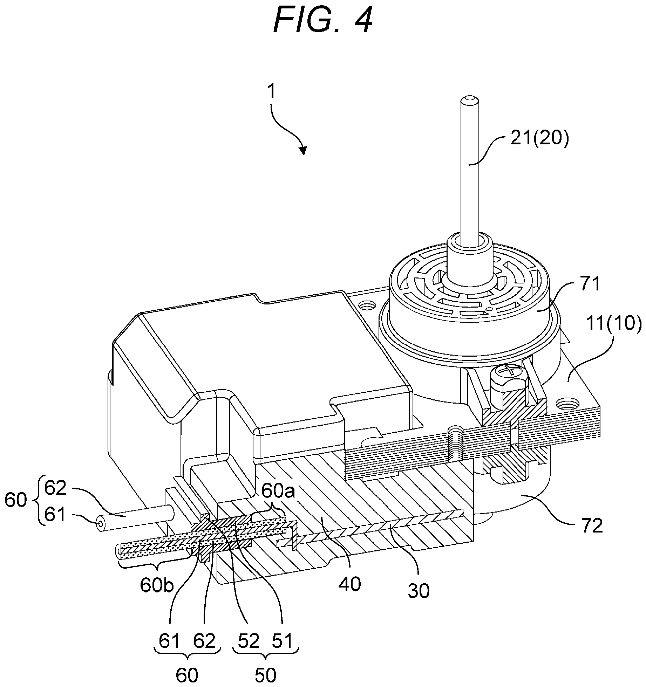

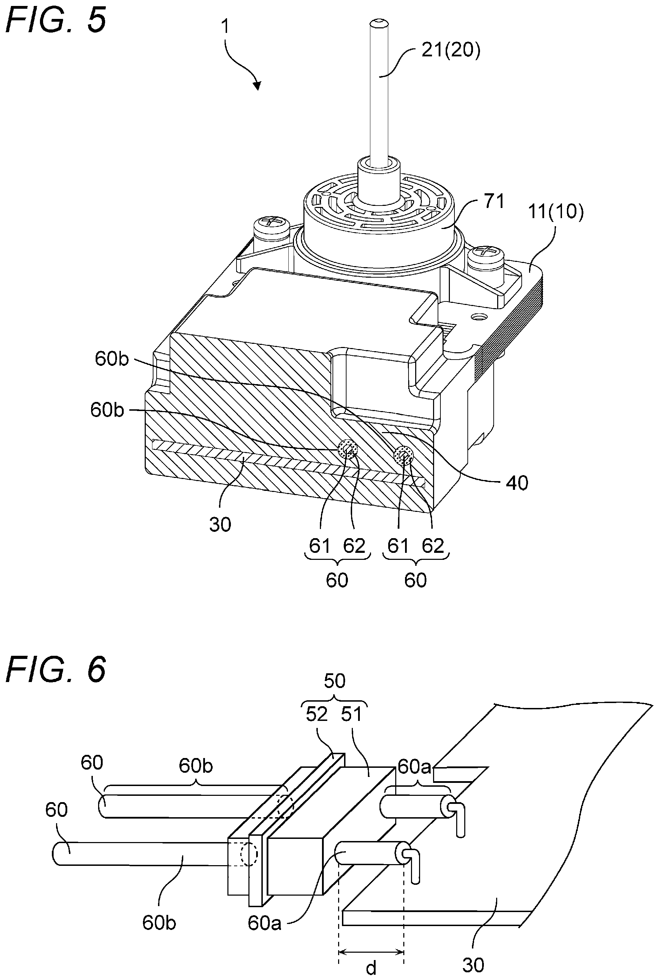

First, a configuration of motor 1 according to an exemplary embodiment will be described with reference to Figs. 1 to 6. Fig. 1 is an external perspective view of motor 1 according to the exemplary embodiment when viewed obliquely from above. Fig. 2 is an external perspective view of motor 1 according to the exemplary embodiment when viewed obliquely from below. Fig. 3 is an exploded perspective view of motor 1 when mold resin 40 is omitted. Fig. 4 is a sectional view of motor 1 according to the exemplary embodiment taken along a plane parallel to a longitudinal direction of lead wire 60. Fig. 5 is a sectional view of motor 1 according to the exemplary embodiment taken along a plane orthogonal to the longitudinal direction of lead wire 60. Fig. 6 is a diagram illustrating a connection relationship between circuit board 30, bush 50, and lead wire 60 in motor 1 according to the exemplary embodiment.

As illustrated in Figs. 1 to 6, motor 1 includes stator 10, rotor 20, circuit board 30, mold resin 40, bush 50, and lead wire 60. Motor 1 further includes first bearing unit 71 and second bearing unit 72 that support shaft 21 of rotor 20.

Motor 1 is a mold motor in which at least a part of stator 10 is covered with mold resin 40. For example, motor 1 can be used as a fan motor in a cooling air circulation blower (inside fan) mounted on a refrigerator.

Stator 10 generates a magnetic force that acts on rotor 20 to rotate rotor 20. As illustrated in Fig. 3, stator 10 includes stator core 11 and coil 12 (stator coil) fixed to stator core 11. In Fig. 3, coil 12 of stator 10 is schematically illustrated, and it actually has a configuration in which a coil wire is wound.

Stator core 11 is disposed facing rotor 20 with a minute air gap interposed between the stator core and rotor 20. Stator core 11 is a stacked body in which a plurality of electromagnetic steel sheets are stacked along the direction of axis C in which shaft 21 included in rotor 20 extends. Stator core 11 is not limited to the stacked body, and it may be a bulk body made of a magnetic material.

Coil 12 is a winding coil wound around stator core 11. A portion of stator core 11 around which coil 12 is wound functions as an excitation part of stator core 11. Specifically, coil 12 is wound around a predetermined portion of stator core 11 via bobbin 13. Bobbin 13 is an insulating frame made of an insulating resin material. Bobbin 13 has a through hole into which a part of stator core 11 is inserted. That is, bobbin 13 is a cylindrical body surrounding a part of stator core 11. Coil 12 is, for example, a coil wire such as an enameled copper wire.

In stator 10 configured as described above, a current flows through coil 12 wound around stator core 11, which causes stator core 11 to generate a magnetic force for rotating rotor 20. Specifically, stator core 11 generates a magnetic flux on the air gap surface with rotor 20 such that N poles and S poles are alternately present along the rotation direction (circumferential direction) of shaft 21. The direction of the main magnetic flux generated by stator core 11 is a direction (radial direction) orthogonal to the axis C of shaft 21.

Rotor 20 is disposed rotatably with respect to stator 10. Rotor 20 rotates with the magnetic force generated by stator 10. Rotor 20 includes shaft 21. Rotor 20 rotates about axis C of shaft 21.

Rotor 20 is disposed facing stator core 11 of stator 10. Specifically, rotor 20 faces stator core 11 in a direction (radial direction) orthogonal to the direction of axis C of shaft 21. That is, rotor 20 is surrounded by stator core 11 when viewed from the direction of axis C of shaft 21. A minute air gap is present between the outer surface of rotor 20 and the inner surface of stator core 11.

As illustrated in Fig. 3, rotor 20 includes shaft 21 and rotor body 22 in which a magnet material is molded in a cylinder shape.

Shaft 21 is a rotary shaft about which rotor 20 rotates. Shaft 21 is formed of an elongated rod-like member such as a metal rod. A longitudinal direction (extension direction) of shaft 21 is a direction (axial direction) in which axis C extends.

Shaft 21 penetrates the center of rotor body 22. Specifically, shaft 21 penetrates the rotor body 22 so as to extend on both sides of rotor body 22 in the direction of axis C of shaft 21. Shaft 21 is fixed to rotor body 22. Specifically, shaft 21 is inserted into a through hole provided at the center of rotor body 22 and fixed to rotor body 22. For example, shaft 21 is fixed to rotor body 22 by being press-fitted into the through hole of rotor body 22. Shaft 21 may be fixed by being molded integrally with rotor body 22.

As illustrated in Figs. 1 and 2, shaft 21 is rotatably supported by first bearing unit 71 and second bearing unit 72. Specifically, in shaft 21, a portion on one side of shaft 21 extending from one side of rotor body 22 is supported by first bearing unit 71. In shaft 21, a portion on the other side of shaft 21 extending from the other side of rotor body 22 is supported by second bearing unit 72.

As illustrated in Fig. 1, the portion on one side of shaft 21 protrudes from first bearing unit 71. That is, shaft 21 penetrates first bearing unit 71. The portion on one side of shaft 21 is a portion on the output side of shaft 21. Thus, a load to be driven by motor 1 is attached to a tip of the portion on one side of shaft 21 protruding from first bearing unit 71. For example, when motor 1 is used as a fan motor, a fan is attached as a load to the portion on one side of shaft 21.

On the other hand, as illustrated in Fig. 2, the portion on the other side of shaft 21 does not protrude from second bearing unit 72. That is, the portion on the other side of shaft 21 is a portion on the opposite output side of shaft 21.

Although detailed description is omitted, first bearing unit 71 and second bearing unit 72 include a frame, a frame cover, a bearing, an oil supply member, and a retainer spring.

The frame is a housing having a substantially bottomed cylindrical shape. The frame cover covers an opening of the frame. The bearing is housed in the frame and rotatably supports the shaft. The oil supply member supplies oil for the bearing. The retainer spring presses and holds the bearing against the frame.

Rotor body 22 illustrated in Fig. 3 generates a magnetic force acting on stator 10. Similarly to stator 10, the direction of the main magnetic flux generated by rotor body 22 is a direction (radial direction) orthogonal to axis C of shaft 21. Specifically, rotor body 22 has a configuration in which N poles and S poles are alternately present along a rotation direction thereof. Rotor body 22 is configured to have one set of the N pole and the S pole. Rotor body 22 may be configured to have a plurality of sets of the N poles and the S poles.

Rotor body 22 is formed of a plastic compound material containing a magnetic material. Thus, rotor body 22 functions as a plastic magnet. Alternatively, rotor body 22 may be formed of a rotor core (rotor iron core) made of a magnetic material, and a plurality of permanent magnets fixed to the rotor core. The permanent magnets may be embedded in the rotor core, or may be attached to the outer surface of the rotor core. For example, when a permanent magnet is embedded in the rotor core, a magnet insertion hole may be formed in the rotor core, and the permanent magnet may be embedded in the magnet insertion hole. The rotor core is a stacked body of a plurality of electromagnetic steel sheets stacked along the direction of axis C of shaft 21. The permanent magnet is, for example, a sintered magnet or a bonded magnet.

Circuit board 30 illustrated in Figs. 3 to 6 is a printed wiring board (PCB) in which wiring made of a conductive material such as copper is formed in a predetermined pattern. As the base material of the circuit board 30, a resin base material such as a glass epoxy substrate or a metal base material such as an aluminum alloy substrate can be used. Circuit board 30 is, for example, a rigid board. However, circuit board 30 may be a flexible substrate.

Circuit board 30 is a mount board on which one or more electronic components (circuit elements) are mounted. Electronic components (not illustrated) for controlling energization of coil 12 of stator 10 are mounted on circuit board 30. In the present exemplary embodiment, a plurality of electronic components are mounted on circuit board 30.

As illustrated in Figs. 4 and 6, lead wire 60 is connected to circuit board 30. Specifically, the wiring of circuit board 30 and conductive wire 61 of lead wire 60 are electrically and mechanically connected. Power is supplied to circuit board 30 via lead wire 60.

The wiring of circuit board 30 and coil 12 of stator 10 are electrically connected. The power supplied to circuit board 30 via lead wire 60 is converted into power for controlling energization of coil 12 by a plurality of electronic components mounted on circuit board 30. The power generated by the plurality of electronic components is supplied from the wiring of circuit board 30 to coil 12. As a result, a current for causing stator 10 to generate a predetermined magnetic flux flows through coil 12.

Mold resin 40 illustrated in Figs. 1 and 2 is a resin molded body formed in a predetermined shape. Mold resin 40 is made of an insulating resin material. Specifically, as mold resin 40, a thermosetting resin or a thermoplastic resin can be used. In this case, as the thermosetting resin, for example, an unsaturated polyester-based resin, a phenol-based resin, an epoxy-based resin or the like can be used. As the thermoplastic resin, for example, a polyethylene terephthalate-based resin, a polybutylene terephthalate-based resin or the like can be used. In the present exemplary embodiment, a thermosetting resin made of a white unsaturated polyester resin (bulk molding compound (BMC)) is used as mold resin 40. That is, the thermosetting resin having fluidity is cured by heat to form mold resin 40.

As illustrated in Fig. 4, mold resin 40 covers at least a part of stator core 11 and circuit board 30 of stator 10. Mold resin 40 covers a portion of stator core 11 around which coil 12 is wound. Specifically, mold resin 40 covers entire bobbin 13 around which coil 12 is wound. Thus, coil 12 is not exposed from mold resin 40. Mold resin 40 covers entire circuit board 30. Specifically, mold resin 40 covers not only circuit board 30 but also all of the plurality of electronic components mounted on circuit board 30. Thus, circuit board 30 and all the electronic components are not exposed from mold resin 40.

As described above, covering coil 12 and circuit board 30 with mold resin 40 makes it possible to insulate and protect coil 12 and circuit board 30 and to prevent deterioration of coil 12 and the electronic components due to moisture and oxygen in the air.

As illustrated in Figs. 1 to 4, bush 50 is an example of a lead wire drawing member for leading out lead wire 60 to the outside of motor 1. That is, bush 50 is a lead bush. Bush 50 and lead wire 60 constitute a lead wire leading structure in motor 1.

At least a part of bush 50 is in contact with mold resin 40. At least a part of bush 50 is covered with mold resin 40. Specifically, bush 50 is covered with mold resin 40 in such a manner as to protrude and be exposed from mold resin 40. Thus, bush 50 has a resin covering portion which is a portion covered with mold resin 40 and an exposed portion which is a portion not covered with mold resin 40 but exposed from mold resin 40.

Bush 50 is not connected to circuit board 30. That is, bush 50 and circuit board 30 are disposed separately and are not in contact with each other. Thus, bush 50 is not fixed to circuit board 30. Bush 50 is fixed to mold resin 40 by being covered with mold resin 40.

As illustrated in Figs. 3, 4, and 6, bush 50 includes main body 51 and catch 52.

Main body 51 holds lead wire 60. Lead wire 60 is attached to main body 51. Specifically, lead wire 60 penetrates main body 51.

A part of main body 51 is covered with mold resin 40. Specifically, in main body 51, a portion on the inner side of catch 52 (a portion on shaft 21 side) is covered with mold resin 40. The inner portions of the upper surface, the lower surface, the left-side surface, and the right-side surface of main body 51 and the entire rear end surface of main body 51 are covered with mold resin 40.

Catch 52 is a portion that catches on a mold used when mold resin 40 is molded. Although details will be described later, catch 52 functions as a positioning unit for determining the position of bush 50 in a mold when mold resin 40 is molded using the mold.

Catch 52 is a protrusion provided on bush 50. Specifically, catch 52 is a protrusion provided on main body 51, and it is formed to protrude from main body 51. In this case, catch 52, which is a protrusion, fits to a recess provided in a mold used for molding mold resin 40. As an example, catch 52 is a protrusion having a rectangular sectional shape. As illustrated in Fig. 6, catch 52 is provided over the entire circumference of bush 50. Specifically, catch 52 is continuously provided over all of the upper surface, the lower surface, the right-side surface, and the left-side surface of main body 51 having a rectangular parallelepiped shape. Catch 52 is formed in a linear shape having a constant width. However, the width of catch 52 does not have to be constant.

Catch 52 also functions as a restriction unit that restricts movement of bush 50 disposed in the mold in inward and outward directions of mold resin 40 when mold resin 40 is molded. Catch 52 restricts bush 50 from moving in a direction (radial direction) orthogonal to the direction of axis C of shaft 21. Thus, catch 52, which is a protrusion, extends in a direction orthogonal to the inward and outward directions (the radial direction in the present embodiment) of mold resin 40. Specifically, catch 52 prevents bush 50 from being drawn into the inside of the mold due to shrinkage of mold resin 40 at the time of curing.

Bush 50 is a resin molded article integrally molded with an insulating resin material. That is, main body 51 and catch 52 are integrally formed. Bush 50 is made of polybutylene terephthalate resin. However, the present disclosure is not limited to this configuration.

Lead wire 60 connected to circuit board 30 is led out to the outside of motor 1 via bush 50. Lead wire 60 led out to the outside via bush 50 is connected to an external power source. External power source may be either an alternate current power source or a direct current power source.

In this manner, one end of lead wire 60 is connected to circuit board 30. The other end of lead wire 60 is connected to an external power source. Specifically, one end of lead wire 60 is inserted into a through hole of circuit board 30 and connected to the wiring of circuit board 30 by solder.

Lead wire 60 is an electric wire with an insulation film. Specifically, as illustrated in Figs. 4 and 6, lead wire 60 includes conductive wire 61 and insulating film 62 covering conductive wire 61. Conductive wire 61 is a core wire of lead wire 60. Conductive wire 61 is made of, for example, a metal material such as copper. Insulating film 62 is a resin film covering conductive wire 61. Insulating film 62 is made of an insulating resin material. As an example, lead wire 60 is a vinyl wire.

Lead wire 60 is attached to bush 50. A pair of lead wires 60 is attached to bush 50. The pair of lead wires 60 is held by bush 50 in parallel so as to be positioned side by side.

Each of the pair of lead wires 60 penetrates bush 50. Specifically, each lead wire 60 penetrates main body 51 so as to extend outward from both sides of the inside and the outside of main body 51 of bush 50. Thus, each lead wires 60 has an internal led-out portion 60a (first portion) led out from bush 50 to the inside of motor 1 and an external led-out portion 60b (second portion) led out from bush 50 to the outside of motor 1. Internal led-out portion 60a located inside bush 50 is covered with mold resin 40. On the other hand, external led-out portion 60b located outside bush 50 is not covered with mold resin 40 but is exposed.

In internal led-out portion 60a covered with mold resin 40, insulating film 62 constituting lead wire 60 and mold resin 40 are in close contact with each other by melting due to a high temperature at the time of molding mold resin 40. In Figs. 4 and 5, the interface between insulating film 62 and mold resin 40 is clearly illustrated. However, no interface between insulating film 62 and mold resin 40 may be present because insulating film 62 and mold resin 40 are brought into close contact with each other by melting. That is, in internal lead-out portion 60a of lead wire 60, insulating film 62 and mold resin 40 are brought into close contact with each other by melting, and thus there may be no clear interface between insulating film 62 and mold resin 40. As illustrated in Fig. 6, length d of internal led-out portion 60a is, for example, more than or equal to 5 mm. Length d of internal led-out portion 60a is not limited to this as long as the entry of water into motor 1 from the interface between insulating film 62 and mold resin 40 can be prevented.

In motor 1 configured as described above, when coil 12 of stator 10 is energized, a field current flows through coil 12, and an excitation part (coil part) of stator core 11 is excited, which generates a magnetic flux in stator core 11. Specifically, rotating magnetic fields of two poles of an S pole and an N pole are generated in stator core 11. Then, the magnetic force generated by the interaction between the magnetic flux generated by stator core 11 and the magnetic flux generated by rotor 20 becomes a torque for rotating rotor 20, and rotor 20 rotates.

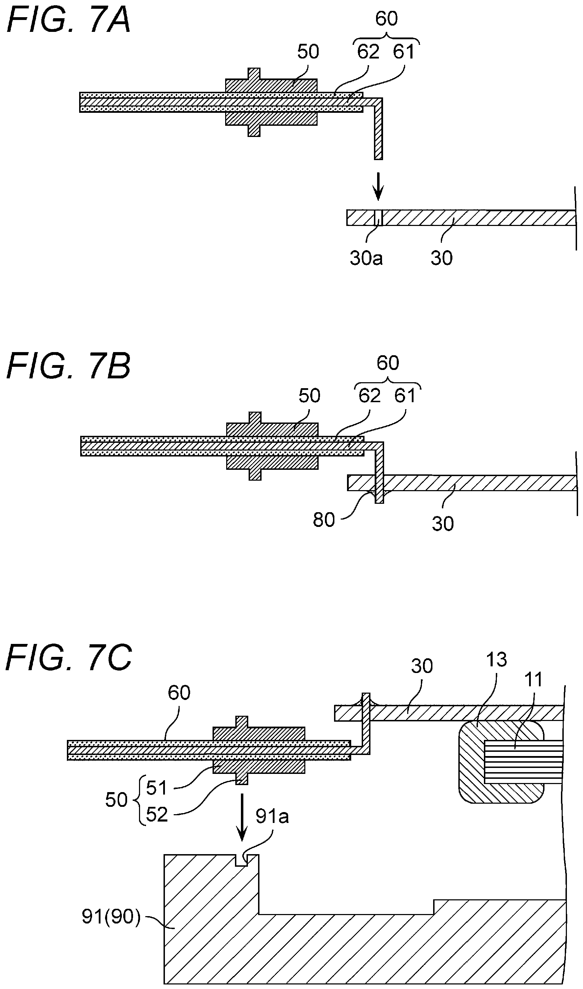

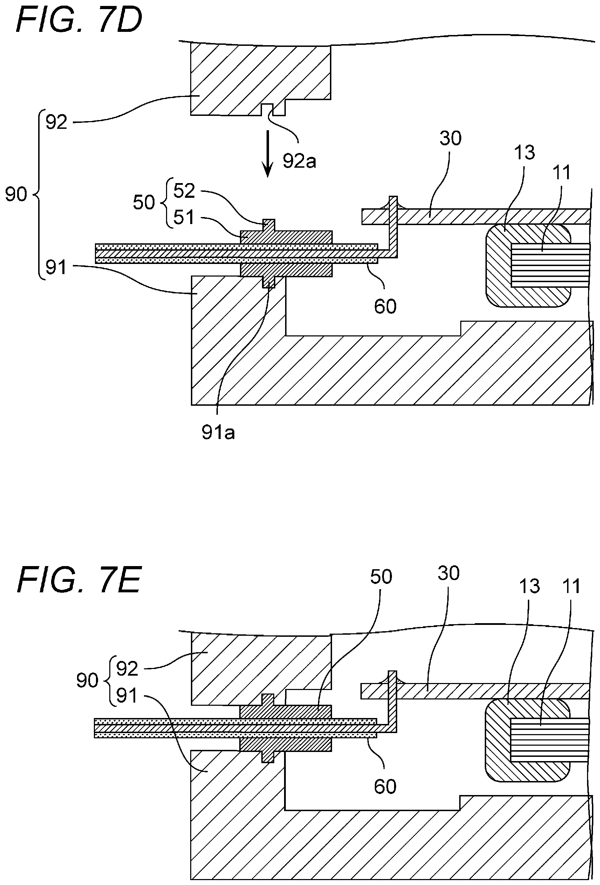

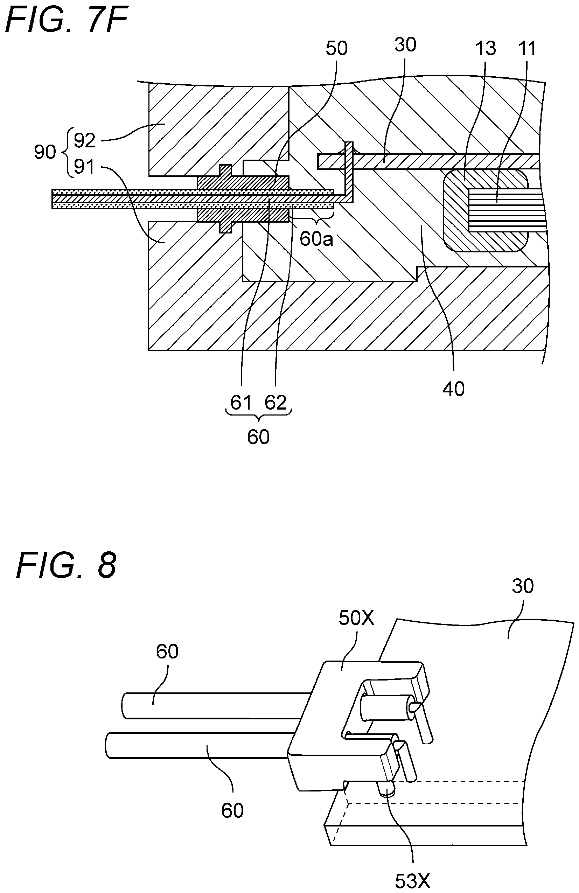

Next, a method for manufacturing motor 1 according to the exemplary embodiment will be described with reference to Figs. 7A to 7F. Fig. 7A is a diagram illustrating a state when lead wire 60 is connected to circuit board 30 in a connection step of the method for manufacturing motor 1 according to the exemplary embodiment. Fig. 7B is a diagram illustrating a state after lead wire 60 is connected to circuit board 30 in the connection step of the method for manufacturing motor 1 according to the exemplary embodiment. Fig. 7C is a diagram illustrating a state when circuit board 30 to which lead wire 60 is connected is disposed in lower mold 91 in a disposition step of the method for manufacturing motor 1 according to the exemplary embodiment. Fig. 7D is a diagram illustrating a state where upper mold 92 is disposed in the disposition step of the method for manufacturing motor 1 according to the exemplary embodiment. Fig. 7E is a diagram illustrating a state where bush 50 is fixed by lower mold 91 and upper mold 92 in the disposition step of the method for manufacturing motor 1 according to the exemplary embodiment. Fig. 7F is a diagram illustrating a resin molding step in the method for manufacturing motor 1 according to the exemplary embodiment.

In the method for manufacturing motor 1 according to the present exemplary embodiment, first, as illustrated in Figs. 7A and 7B, lead wire 60 to which bush 50 is attached is connected to circuit board 30 (connection step).

Specifically, as illustrated in Fig. 7A, conductive wire 61 exposed at an end on one side of lead wire 60 to which bush 50 is attached is inserted into through hole 30a provided in circuit board 30, and a tip of conductive wire 61 penetrating circuit board 30 is solder-connected by solder 80. This makes it possible to electrically and mechanically connect lead wire 60 to which bush 50 is attached to circuit board 30, as illustrated in Fig. 7B. Although not illustrated, at this time, a plurality of electronic components are also solder-mounted on circuit board 30.

Next, as illustrated in Figs. 7C to 7E, circuit board 30 to which lead wire 60 is connected is disposed in mold 90 (disposition step). At this time, stator core 11 around which coil 12 is wound via bobbin 13 is also disposed in mold 90 together with bobbin 13 disposed on circuit board 30. When circuit board 30 is disposed in mold 90, the direction of circuit board 30 is reversed from the direction illustrated in Figs. 7A and 7B. With this configuration, the attachment position of circuit board 30 to mold 90 is determined via stator 10 constituting motor 1.

Mold 90 is a mold of an injection molding machine. Mold 90 includes a plurality of blocks. The injection molding machine is a vertical type. Thus, mold 90 is configured to open and close in a longitudinal direction. Specifically, mold 90 includes lower mold 91 as a first block and upper mold 92 as a second block.

In this step, bush 50 is disposed in mold 90 by causing catch 52 of bush 50 to catch on mold 90.

Specifically, first, as illustrated in Fig. 7C, lower mold 91 provided with recess 91a corresponding to catch 52 of bush 50 is prepared. A lower portion of catch 52 of bush 50 that holds lead wire 60 connected to circuit board 30 is caused to catch on recess 91a of lower mold 91. Since catch 52 is a protrusion that fits to recess 91a of lower mold 91, the lower portion of catch 52 is fitted to recess 91a. Circuit board 30 is connected to stator core 11 via bobbin 13. Stator core 11 is disposed in lower mold 91. This causes circuit board 30 and bush 50 to be disposed at predetermined positions of lower mold 91. That is, circuit board 30 and bush 50 are positioned. Recess 91a of lower mold 91 is formed on the upper surface of the outer peripheral end of lower mold 91.

Subsequently, as illustrated in Fig. 7D, upper mold 92 provided with recess 92a corresponding to catch 52 of bush 50 is set. Specifically, upper mold 92 is set by fitting recess 92a provided in upper mold 91 into the upper portion of catch 52 of bush 50 disposed in lower mold 92. As a result, as illustrated in Fig. 7E, bush 50 is sandwiched between lower mold 91 and upper mold 92, and bush 50 and circuit board 30 are disposed at predetermined positions of mold 90. Recess 92a of upper mold 92 is formed on the lower surface of the outer peripheral end of upper mold 92. Recess 92a of upper mold 92 is formed at a position facing recess 91a of lower mold 91.

Next, as illustrated in Fig. 7F, a liquid resin is injected into mold 90 and cured, whereby at least a part of stator 10 (not illustrated) and circuit board 30 is covered with mold resin 40 (resin molding step). In this step, mold resin 40 is brought into contact with at least a part of bush 50. In the present exemplary embodiment, about half of bush 50 is covered with mold resin 40.

Specifically, first, a liquid resin having fluidity is injected into mold 90 in which bush 50, circuit board 30, and stator 10 are disposed through a gate (not illustrated) provided in mold 90, whereby the inside of mold 90 is filled with the liquid resin, and the liquid resin is cured. As the liquid resin, a thermosetting resin made of an unsaturated polyester resin is used. Thus, the liquid resin filled in mold 90 is cured by being heated to become mold resin 40. For example, the liquid resin is heated and cured by heating mold 90 to a predetermined temperature.

At this time, the temperature at which the liquid resin is heated is higher than the heat-resistant temperature of insulating film 62 of lead wire 60. Thus, insulating film 62 of lead wire 60 in the portion covered with the liquid resin (internal led-out portion 60a) is melted by the temperature at which the liquid resin is heated. As a result, when the liquid resin is cured into mold resin 40, insulating film 62 of lead wire 60 and mold resin 40 are brought into close contact with each other by melting.

As an example, the heat-resistant temperature of insulating film 62 of lead wire 60 is about 105°C. The set temperature (heating temperature) of mold 90 is about 130°C. In this case, the liquid resin made of an unsaturated polyester resin undergoes self-heating by being heated. This causes the temperature of the liquid resin to be higher than the set temperature of mold 90 by about 15°C. That is, the temperature of the liquid resin when the liquid resin is heated is a high temperature of about 145°C. Insulating film 62 of lead wire 60 melts with the high temperature at the time of heating the liquid resin. In consideration of the heat-resistant temperature of the electronic component mounted on circuit board 30, the temperature of the liquid resin is preferably less than or equal to 150°C.

When the liquid resin is cured to form a resin molded body, the liquid resin shrinks. That is, when the temperature of the liquid resin decreases (during cooling), the liquid resin shrinks. At this time, bush 50 covered with the liquid resin receives stress drawn into mold 90 due to shrinkage of the liquid resin. However, since catch 52 of bush 50 is caught on mold 90, bush 50 does not move into mold 90. That is, catch 52 restricts bush 50 from moving in the direction toward the inside of mold 90. Since catch 52 is fitted into recess 91a of lower mold 91 and recess 92a of upper mold 92, the movement of bush 50 can be effectively prevented.

When the liquid resin is thermally cured in this manner, a part of stator 10, entire circuit board 30, and a part of bush 50 are covered with mold resin 40. Internal led-out portion 60a of lead wire 60 is also covered with mold resin 40. This completes a stator assembled body.

Although not illustrated, rotor 20 having shaft 21, first bearing unit 71, and second bearing unit 72 are then assembled to stator 10 covered with mold resin 40, whereby motor 1 is completed.

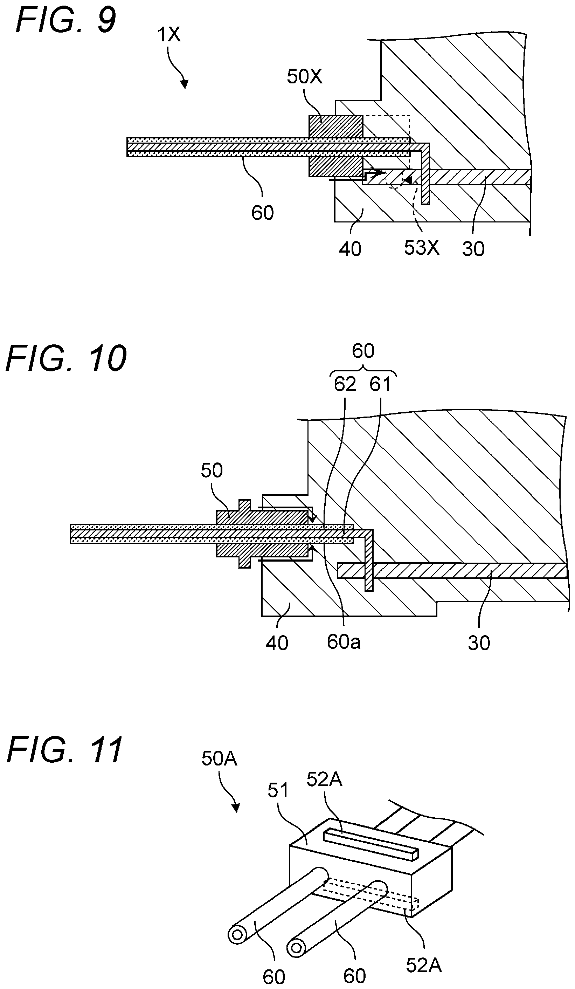

Next, the operation and effect of motor 1 thus obtained will be described in comparison with motor 1X of a comparative example with reference to Figs. 8 to 10. Fig. 8 is a diagram illustrating a connection relationship between circuit board 30, bush 50X, and lead wire 60 in motor 1X of the comparative example. Fig. 9 is a partial sectional view of motor 1X of the comparative example. Fig. 10 is a partial sectional view of motor 1 according to the exemplary embodiment. Fig. 10 corresponds to the section of Fig. 4.

In a motor in which a circuit board is covered with a mold resin, a lead wire drawing member such as a bush is used to lead out a lead wire connected to the circuit board from the mold resin. In this case, when the mold resin is molded with a mold, it is necessary to determine the position of the lead wire drawing member with respect to the mold.

For example, as illustrated in Figs. 8 and 9, in motor 1 of the comparative example, the position of bush 50X with respect to the mold is determined by fixing bush 50X (lead wire drawing member) to which lead wire 60 is attached to circuit board 30. Specifically, projection 53X is provided in bush 50X, and projection 53X is fitted into a through hole formed in circuit board 30. Thus, disposing circuit board 30 to which bush 50X is fixed at a predetermined position of the mold makes it possible to also dispose bush 50X at a predetermined position of the mold.

However, in the structure of motor 1X of the comparative example, bush 50X and circuit board 30 are in contact with each other. Thus, water attached to the surface of motor 1X may reach circuit board 30. For example, when motor 1X is installed in a place where dew condensation easily occurs, water generated by the dew condensation is attached to the surface of motor 1X. Water attached to the surface of motor 1X enters motor 1X from the boundary (connecting part) between bush 50X and mold resin 40. As indicated by an arrow in Fig. 9, there is a possibility that the water having entered the motor flows along the interface between bush 50X and mold resin 40 due to a capillary phenomenon and reaches circuit board 30 to which bush 50X is connected after a long time. When water reaches circuit board 30 like this, there is a risk of causing a defect such as a short circuit. In addition, when water that has entered motor 1X reaches a coil (not illustrated) of the stator, a layer short of the coil may be caused.

On the other hand, as illustrated in Fig. 10, in motor 1 according to the present exemplary embodiment, circuit board 30 covered with mold resin 40 and resin bush 50 are not in contact with each other. That is, there is no interface between resins between circuit board 30 and bush 50.

As a result, as indicated by an arrow in Fig. 10, even though water attaches to the surface of motor 1 and enters motor 1 from the boundary (connecting part) between bush 50 and mold resin 40 due to a capillary phenomenon, and the water flows along the interface between bush 50 and mold resin 40, bush 50 and circuit board 30 are not in contact with each other, and thus the water that has entered motor 1 does not reach circuit board 30.

At this time, the water that has entered motor 1 may flow along the interface between lead wire 60 led out from bush 50 to the inside and mold resin 40 to the back of the inside. However, in the present exemplary embodiment, insulating film 62 and mold resin 40 in internal led-out portion 60a of lead wire 60 are in close contact with each other by melting. Thus, there is no interface between the resins of lead wire 60 and mold resin 40. This can further prevent water that has entered motor 1 from reaching circuit board 30. In this manner, in motor 1 according to the present exemplary embodiment, a melt-close-contact portion where insulating film 62 of lead wire 60 and mold resin 40 are in close contact with each other by melting functions as a stopper that prevents the progress of water.

From the viewpoint of preventing the progress of water, the length of internal led-out portion 60a of lead wire 60 is preferably more than or equal to 5 mm, and more preferably more than or equal to 10 mm. Increasing the length of internal led-out portion 60a makes it possible to increase the melt-close-contact portion where insulating film 62 and mold resin 40 are in close contact with each other by melting. This makes it possible to further prevent water that has entered motor 1 from reaching circuit board 30 along the interface between lead wire 60 and mold resin 40.

In this manner, in one aspect, motor 1 according to the present exemplary embodiment includes stator 10 including stator core 11 and coil 12 wound around stator core 11, rotor 20 that rotates with a magnetic force generated by stator 10, circuit board 30 on which an electronic component for controlling energization of coil 12 is mounted, mold resin 40 covering at least a part of stator core 11 and circuit board 30, a lead wire drawing member corresponding to bush 50 at least a part of which is in contact with mold resin 40, and lead wire 60 connected to circuit board 30 and led out to an outside via the lead wire drawing member. The lead wire drawing member includes catch 52 that catches on a mold used when mold resin 40 is molded.

Motor 1 of the present exemplary embodiment makes it possible to prevent water that has entered the motor from the boundary between bush 50 and mold resin 40 from reaching circuit board 30. Thus, it is possible to prevent occurrence of a defect such as a short circuit. Therefore, it is possible to realize motor 1 with high reliability.

In another aspect, motor 1 according to the present exemplary embodiment includes stator 10 including stator core 11 and coil 12 wound around stator core 11, rotor 20 that rotates with a magnetic force generated by stator 10, circuit board 30 on which an electronic component that controls energization of coil 12 is mounted, mold resin 40 covering at least a part of stator core 11 and circuit board 30, a lead wire drawing member corresponding to bush 50 at least a part of which is in contact with mold resin 40, and lead wire 60 connected to circuit board 30 and led out to an outside via the lead wire drawing member. Lead wire 60 includes conductive wire 61 and insulating film 62 covering conductive wire 61. Internal led-out portion 60a of lead wire 60 led out from the lead wire drawing member to the inside is covered with mold resin 40. Insulating film 62 and mold resin 40 in internal led-out portion 60a are in close contact with each other by melting.

This makes it possible to prevent water that has entered motor 1 from reaching circuit board 30 along the interface between lead wire 60 and mold resin 40.

In another aspect, a method for manufacturing motor 1 according to the present embodiment includes a connection step of connecting, to circuit board 30, lead wire 60 to which the lead wire drawing member corresponding to bush 50 is attached, a disposition step of disposing, in mold 90, stator 10 including stator core 11 around which coil 12 is wound and circuit board 30, and a resin molding step of injecting a liquid resin into mold 90 and curing the liquid resin to cover at least a part of stator 10 and circuit board 30 with mold resin 40. In the disposition step, the lead wire drawing member is disposed in mold 90 by causing catch 52 of lead wire drawing member to catch on mold 90. In the resin molding step, mold resin 40 is brought into contact with at least a part of lead wire drawing member.

This makes it possible to obtain a motor capable of preventing water that has entered the motor from the boundary between the lead wire drawing member and the mold resin from reaching the circuit board.

In the present exemplary embodiment, bush 50 holding lead wire 60 and circuit board 30 are not in contact with each other, and bush 50 is not fixed to circuit board 30. This causes another problem that bush 50 cannot be positioned by circuit board 30 when mold resin 40 is molded with mold 90.

In view of this problem, in motor 1 according to the present exemplary embodiment, bush 50 has catch 52 that catches on mold 90 used when mold resin 40 is molded.

With this configuration, when mold resin 40 is molded using mold 90, bush 50 can be caused to catch on and fixed to mold 90. In this manner, in motor 1 according to the present exemplary embodiment, positioning of bush 50 with respect to mold 90 is not performed by fixing bush 50 to circuit board 30, but positioning of bush 50 with respect to mold 90 is performed by causing bush 50 to catch on mold 90. This makes it possible to set bush 50 at a predetermined position of mold 90 without fixing bush 50 to circuit board 30. Also, bush 50 and circuit board 30 can be easily covered with mold resin 40.

In the present exemplary embodiment, catch 52 of bush 50 restricts the movement of bush 50 in the inward and outward directions of mold resin 40. That is, when mold resin 40 is molded with mold 90, bush 50 restricts movement in the inward and outward directions of mold 90.

This makes it possible to prevent bush 50 from being drawn into the inside of mold 90 when the liquid resin injected into mold 90 is cured and shrunk.

In motor 1 according to the present exemplary embodiment, catch 52 of bush 50 is a protrusion. The protrusion fits to recesses 91a and 92a provided in mold 90. Catch 52 is provided over the entire circumference of bush 50.

With this configuration, bush 50 can be effectively prevented from moving in the inward and outward directions of mold resin 40. Thus, it is possible to further prevent bush 50 from being drawn into the inside of mold 90 when the liquid resin shrinks during curing.

### (Modification)

The motor and the method for manufacturing the motor according to the present disclosure have been described above based on the exemplary embodiment. The present disclosure is not limited to the exemplary embodiment described above.

For example, in the exemplary embodiment described above, catch 52 of bush 50 is provided over the entire circumference of main body 51. However, the present disclosure is not limited to this configuration.

Specifically, as in bush 50A illustrated in Fig. 11, catch 52A, which is a protrusion, may be formed only on the upper surface and the lower surface of main body 51. Fig. 11 is a diagram illustrating a configuration of bush 50A according to Modification 1. Alternatively, catch 52A may be formed on only one of the upper surface and the lower surface of main body 51.

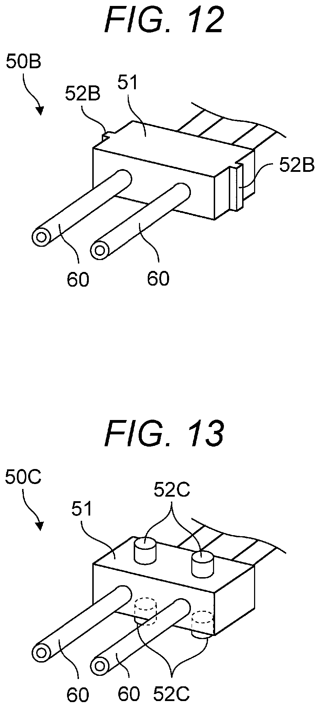

Fig. 12 is a diagram illustrating a configuration of bush 50B according to Modification 2. As in bush 50B illustrated in Fig. 12, catch 52B, which is a protrusion, may be formed only on the left-side surface and the right-side surface of main body 51. Alternatively, catch 52B may be formed on only one of the left-side surface and the right-side surface of main body 51. In this case, the mold for molding mold resin 40 is provided with a recess on the side surface according to the position of catch 52B.

In the exemplary embodiment described above, catch 52 of bush 50 is a protrusion having a linear shape. However, the present disclosure is not limited to this configuration. For example, as in bush 50C illustrated in Fig. 13, catch 52C may be a protrusion having a projection shape. Fig. 13 is a diagram illustrating a configuration of bush 50 C according to Modification 3. In this case, the number of catches 52C, which are protrusion having a projection shape, is not limited to two, but may be one or three or more. In addition, as illustrated in Fig. 13, catch 52C, which is a protrusion having a projection shape, may be formed only on the upper surface and the lower surface of main body 51. Catch 52C may be formed only on one of the upper surface and the lower surface of main body 51. Alternatively, catch 52C may be formed only on one or both of the left-side surface and the right-side surface of main body 51, or may be formed on the entire four surfaces of the upper surface, the lower surface, the left-side surface, and the right-side surface of main body 51. That is, one or a plurality of catches 52C, which are protrusions having a projection shape, may be formed on at least one of the upper surface, the lower surface, the left-side surface, and the right-side surface of main body 51.

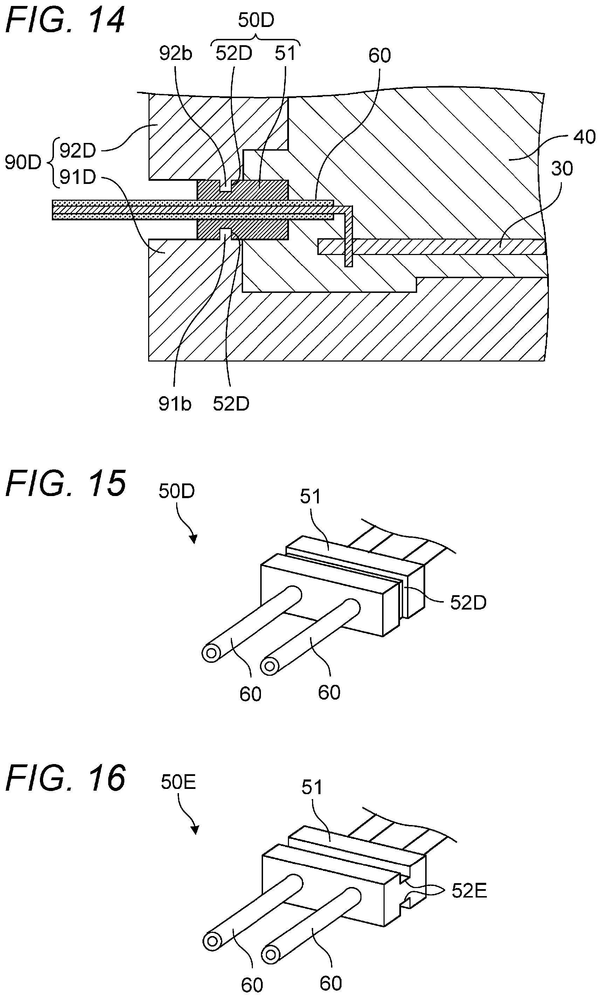

In the exemplary embodiment described above, catch 52 of bush 50 is a protrusion, and mold 90 is provided with recesses 91a and 92a to which the protrusion fits. However, the present disclosure is not limited to this configuration. For example, as illustrated in Figs. 14 and 15, catch 52D of bush 50D may be a recess, and mold 90D may be provided with protrusions 91b and 92b to which the recess fits. Fig. 14 is a diagram illustrating a state where bush 50D according to Modification 4 is disposed in a mold. Fig. 15 is a diagram illustrating a configuration of bush 50D according to Modification 4. Specifically, as in bush 50D illustrated in Fig. 15, catch 52D, which is a recess, may be formed over the entire circumference of main body 51. In this case, as in mold 90D illustrated in Fig. 14, lower mold 91D is provided with protrusion 91b to be fitted to a lower portion of catch 52D which is a recess. Upper mold 92D is provided with protrusion 92b to be fitted to an upper portion of catch 52D which is a recess. Protrusions 91b and 92b do not have to be parts of mold 90D, but they may be pins or the like separately fixed to mold 90D.

In bush 50D illustrated in Fig. 15, catch 52D is provided over the entire circumference of main body 51. However, the present disclosure is not limited to this configuration.

Specifically, as in bush 50E illustrated in Fig. 16, catch 52E, which is a recess, may be formed only on the upper surface and the lower surface of main body 51. Fig. 16 is a diagram illustrating a configuration of bush 50E according to Modification 5. Alternatively, catch 52E may be formed on only one of the upper surface and the lower surface of main body 51.

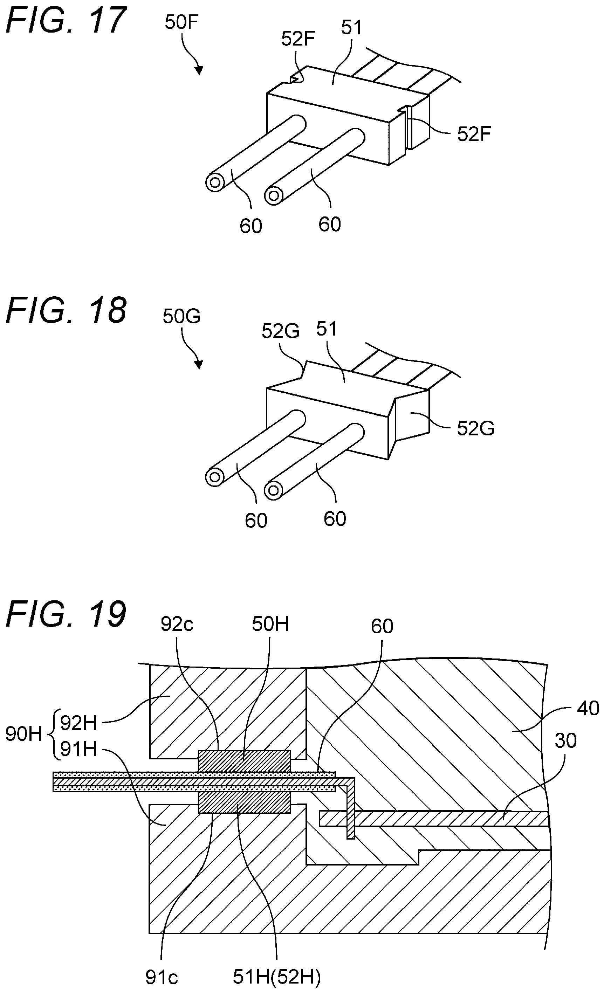

As in bush 50F illustrated in Fig. 17, catch 52F which is a recess may be formed only on the left-side surface and the right-side surface of main body 51. Fig. 17 is a diagram illustrating a configuration of a bush according to Modification 6. Alternatively, catch 52F may be formed on only one of the left-side surface and the right-side surface of main body 51. In this case, the mold for molding mold resin 40 is provided with a protrusion on a side surface according to the position of catch 52F.

In Figs. 15 to 17, catches 52D, 52E, and 52F are recesses having a rectangular sectional shape. However, the present disclosure is not limited to this configuration. For example, as in bush 50G illustrated in Fig. 18, catch 52G may be a recess having a triangular sectional shape. Fig. 18 is a diagram illustrating a configuration of bush G according to Modification 7. Specifically, catch 52G illustrated in Fig. 18 is formed such that each of the left-side surface and the right-side surface of main body 51 is recessed in a V shape.

When the catch of the bush is formed into a recess, a recess (for example, a recess having a shape obtained by inverting the protrusion having a projection shape in Fig. 13) may be formed instead of a recess having a groove shape (linear shape) as in Figs. 15 and 16. In this case, one or a plurality of catches, which are depressed recesses, may be formed on at least one of the upper surface, the lower surface, the left-side surface, and the right-side surface of main body 51. The catch does not have to be a bottomed recess in which a part of main body 51 is depressed, but it may be a bottomless through hole. In this case, the mold may be provided with a protrusion or a pin to be inserted into the catch that is a through hole.

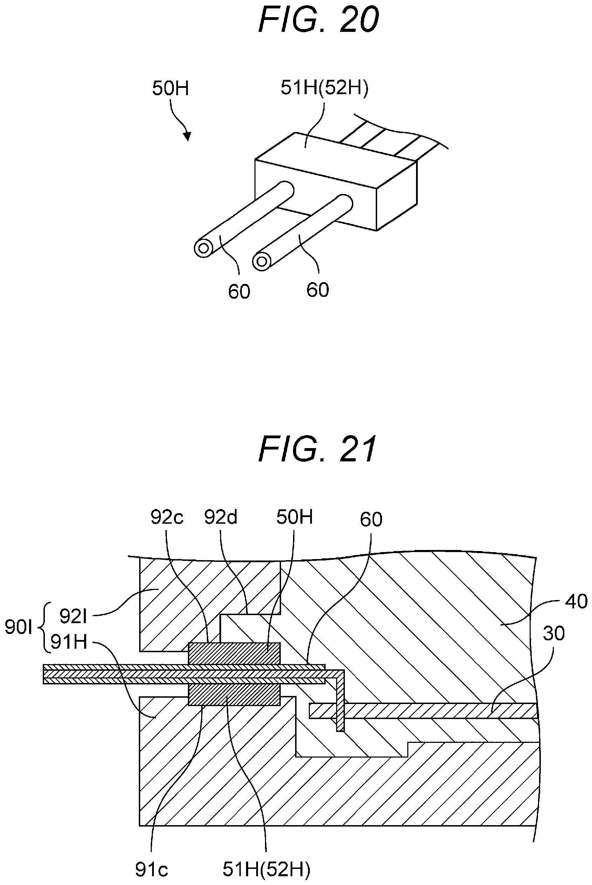

In the exemplary embodiment described above, catch 52 of bush 50 is provided separately from main body 51. However, the present disclosure is not limited to this configuration. Specifically, as illustrated in Figs. 19 and 20, main body 51H itself of the rectangular parallelepiped in bush 50H may be catch 52H. Fig. 19 is a diagram illustrating a state when bush 50H according to Modification 8 is disposed in mold 90H. Fig. 20 is a diagram illustrating a configuration of bush 50H according to Modification 8. In this case, as in mold 90 H illustrated in Fig. 19, lower mold 91H is provided with recess 91c to be fitted to a lower portion of main body 51H that is catch 52H. Upper mold 92H is provided with recess 92c to be fitted to an upper portion of main body 51H that is catch 52H. In the present modification, the entire surface of the six surfaces of the rectangular parallelepiped main body 51H is restricted by mold 90H by recesses 91c and 92c of mold 90H.

In mold 90H illustrated in Fig. 19, mold resin 40 is in contact with only the rear end surface of main body 51H of bush 50H. Thus, the holding force with which bush 50H is held by mold resin 40 is low. Thus, as in mold 90I illustrated in Fig. 21, stepped portion 92d may be provided in recess 92c of upper mold 92I. Fig. 21 is a diagram illustrating a state where bush 50H according to Modification 8 is disposed in mold 90I having another configuration. This configuration causes mold resin 40 to be brought into contact with not only the rear end surface of main body 51H of bush 50H but also the upper surface of main body 51H. Thus, the holding force with which bush 50H is held by mold resin 40 can be improved.

In the exemplary embodiment described above, it has been described that motor 1 is used as a cooling blower as a fan motor. However, the present disclosure is not limited to this configuration. For example, motor 1 can be used as a fan motor of various blowers. The technology of the present disclosure can also be applied to a motor other than a fan motor.

The present disclosure also includes an aspect obtained by applying various modifications conceived by those skilled in the art to the exemplary embodiment described above, or an aspect achieved by appropriately combining components and functions in the exemplary embodiment within a range without departing from the gist of the present disclosure.

### INDUSTRIAL APPLICABILITY

The technology of the present disclosure can be used for various electric devices having a motor. In particular, the technology of the present disclosure is useful for a motor used in an environment where water droplets are likely to attach.

### REFERENCE MARKS IN THE DRAWINGS

1: motor
10: stator
11: stator core
12: coil
13: bobbin
20: rotor
21: shaft
22: rotor body
30: circuit board
30a: through hole
40: mold resin
50, 50A, 50B, 50C, 50D, 50E, 50F, 50G, 50H: bush
51, 51H: main body
52, 52A, 52B, 52C, 52D, 52E, 52F, 52G, 52H: catch
60: lead wire
60a: internal led-out portion
60b: external led-out portion
61: conductive wire
62: insulating film
71: first bearing unit
72: second bearing unit
80: solder
90, 90D, 90H, 90I: mold
91, 91D, 91H: lower mold
91a, 91c: recess
91b: protrusion
92, 92D, 92H, 92I: upper mold
92a, 92c: recess
92b: protrusion
92d: stepped portion

## Claims

1. A motor comprising:
a stator including a stator core and a coil wound around the stator core;
a rotor that rotates with a magnetic force generated by the stator;
a circuit board on which an electronic component for controlling energization of the coil is mounted;
a mold resin covering at least a part of the stator core and the circuit board;
a lead wire drawing member at least a part of which is in contact with the mold resin; and
a lead wire connected to the circuit board and led out to an outside via the lead wire drawing member, wherein the lead wire drawing member includes a catch that catches on a mold used when the mold resin is molded.

2. The motor according to Claim 1, wherein the catch restricts the lead wire drawing member from moving in inward and outward directions of the mold resin.

3. The motor according to Claim 1 or 2, wherein
the catch is a protrusion provided on the lead wire drawing member, and
the protrusion fits to a recess provided in the mold.

4. The motor according to Claim 1 or 2, wherein
the catch is a recess provided in the lead wire drawing member, and
the recess fits to a protrusion provided in the mold.

5. The motor according to Claim 3 or 4, wherein the catch is provided over an entire circumference of the lead wire drawing member.

6. The motor according to any one of Claims 1 to 5, wherein
the lead wire includes a conductive wire and an insulating film covering the conductive wire,
an internal led-out portion of the lead wire, the internal led-out portion being led out from the lead wire drawing member to an inside, is covered with the mold resin, and
the insulating film and the mold resin in the internal led-out portion are in close contact with each other by melting.

7. A motor comprising:
a stator including a stator core and a coil wound around the stator core;
a rotor that rotates with a magnetic force generated by the stator;
a circuit board on which an electronic component that controls energization of the coil is mounted;
a mold resin covering at least a part of the stator core and the circuit board;
a lead wire drawing member at least a part of which is in contact with the mold resin; and
a lead wire connected to the circuit board and led out to an outside via the lead wire drawing member,
wherein
the lead wire includes a conductive wire and an insulating film covering the conductive wire,
an internal led-out portion of the lead wire, the internal led-out portion being led out from the lead wire drawing member to an inside, is covered with the mold resin, and
the insulating film and the mold resin in the internal led-out portion are in close contact with each other by melting.

8. A method for manufacturing a motor, the method comprising:
a connection step of connecting, to a circuit board, a lead wire to which a lead wire drawing member is attached;
a disposition step of disposing, in a mold, a stator including a stator core around which a coil is wound and the circuit board; and
a resin molding step of injecting a liquid resin into the mold and curing the liquid resin to cover at least a part of the stator and the circuit board with a mold resin,
wherein
in the disposition step, the lead wire drawing member is disposed in the mold by causing a catch included in the lead wire drawing member to catch on the mold, and
in the resin molding step, the mold resin is brought into contact with at least a part of the lead wire drawing member.

9. The method for manufacturing a motor according to Claim 8, wherein the catch restricts the lead wire drawing member from moving in inward and outward directions of the mold.

10. The method for manufacturing a motor according to Claim 8 or 9, wherein
the catch is a protrusion provided on the lead wire drawing member, and
the mold includes a recess that fits to the protrusion.

11. The method for manufacturing a motor according to Claim 8 or 9, wherein
the catch is a recess provided in the lead wire drawing member, and
the mold includes a protrusion that fits to the recess.

12. The method for manufacturing a motor according to Claim 10 or 11, wherein the catch is provided over an entire circumference of the lead wire drawing member.
